# EUROPEAN PATENT APPLICATION

(11) **EP 4 815 138 A1**
(43) Date of publication of application: **30.09.2026**
(21) Application number: 24892637.0
(22) Date of filing: 28.03.2024
(51) Int. Cl.: H01M 50/22, H01M 50/224

(54) **FLAME-RETARDANT BOX FOR POWER BATTERY**

(30) Priority: 20.11.2023 CN 202311550863
(71) Applicant: Meizhou Jiangnan Electric Appliance Co., Ltd., Meizhou, Guangdong 514000 (CN)
(72) Inventor: CHEN, Zhifeng, Meizhou, Guangdong 514000 (CN); CHEN, Chao, Meizhou, Guangdong 514000 (CN); CHEN, Ting, Meizhou, Guangdong 514000 (CN); SONG, Xuer, Meizhou, Guangdong 514000 (CN); LI, Shulan, Meizhou, Guangdong 514000 (CN); LI, Wanmin, Meizhou, Guangdong 514000 (CN)
(74) Representative: Cabinet Chaillot
(86) International application number: PCT/CN2024/084417
(87) International publication number: WO 2025/107470

(57) **Abstract**

The present invention relates to the technical field of battery flame retardance. Disclosed is a flame-retardant box for a power battery. The flame-retardant box comprises a box body and a box cover which are made of fireproof material layers; a positioning structure for fixing the fireproof material layers is arranged outside the box body; at least one accommodating slot for accommodating a battery is formed in the box body along the horizontal direction; the box cover and the accommodating slot are matched to form an independent flame-retardant chamber for preventing air convection; and a wire passing hole is formed in the side wall of the box body. The present invention aims to provide the flame-retardant box for the power battery, which has a compact structure, is high-temperature-resistant and has a good use effect; and is used for power battery flame retardance.

## Description

### Technical Field

The invention belongs to the technical field of flame-retardant boxes, in particular to a flame-retardant box for a power battery.

### Background Art

Currently, with the rapid proliferation of new energy vehicles (NEVs) and energy storage systems powered by power batteries, coupled with the surging volume of decommissioned batteries, battery recycling and disposal have become an urgent issue. The government encourages the "cascade utilization" of traction batteries. In the field of energy storage, although retired batteries offer a significant cost advantage, they suffer from a critical flaw: the probability of failure and subsequent thermal runaway (combustion) is substantially higher than that of new power batteries. Unless this safety hazard is effectively addressed, it is impossible to ensure the safe operation of both new and used power batteries.

### Summary of the Invention

The purpose of the invention is to address the shortcomings of the prior art by providing a compactly structured, high-temperature resistant, and well-performing flame-retardant box for a power battery.

The technical solution of the invention is implemented as follows: a flame-retardant box for a power battery, comprising a box body and a box cover made of high-temperature-resistant fireproof material layers, a positioning structure is arranged outside the box body to secure each fireproof material layer; at least one accommodating slot for receiving batteries is formed inside the box body, the box cover and the accommodating slot cooperate to form an independent flame-retardant chamber that prevents air convection; wire passing holes are arranged on sidewalls of the box body.

In the aforementioned flame-retardant box for the power battery, the positioning structure comprises fastening screws that connect the fireproof material layers, and an outer sidewall of the box body is circumferentially covered with a waterproof tape.

In the aforementioned flame-retardant box for the power battery, the box body and the box cover are hinged, a positioning component for securing the box body and the box cover is arranged at an end away from a hinged end. Preferably, the positioning component is a spring latch assembly.

In the aforementioned flame-retardant box for the power battery, the box body comprises several side plates arranged circumferentially to form a closed annular structure and a bottom plate positioned at a bottom of the closed annular structure formed by the side plates;
several partitions are spaced apart within the side plates, the accommodating slots are formed by the cooperation of the side plates, partitions, and the bottom plate; both the side plates and the partitions are made of fireproof material layers, while the bottom plate is made of either a fireproof material layer or fireproof fabric; the box covers correspond to and fit with the accommodating slots one-to-one.

In the aforementioned flame-retardant box for the power battery, the positioning structure comprises a positioning housing, the positioning housing is provided with positioning slots for securing the fireproof material layers, the bottom plate is located at a bottom inside the positioning housing, the side plates and partitions are secured through the positioning slots, with each fireproof material layer cooperating to form a groove body that is open on one side; positioning covers that correspond to the box covers are hinged at an opening of the positioning housing, and the positioning covers wrap around outer surfaces of the box covers.

In the aforementioned flame-retardant box for the power battery, the positioning housing is rectangular, the positioning slots at both ends of the positioning housing are L-shaped, the L-shaped positioning slots cooperate with the positioning housing to form two sockets that are mutually perpendicular.
one positioning slot located in a middle of the positioning housing consists of a "[ " shaped groove body and vertically folded edges at two free ends of the integrated groove body, this positioning slot cooperates with the positioning housing to form three sockets, two adjacent sockets are mutually perpendicular; the positioning housing, positioning slots, and fireproof material layers cooperate to form several independent accommodating slots.

In the aforementioned flame-retardant box for the power battery, a thermal conductive plate for heating or heat dissipation is arranged at the bottom inside the positioning housing.

In the aforementioned flame-retardant box for the power battery, an installation notch is arranged at a bottom of a side wall of the positioning housing, and a sealing plate with an inner fireproof material layer is arranged at the installation notch.

In the aforementioned flame-retardant box for the power battery, the positioning housing and the positioning slots are integrally formed as a whole structure, the positioning slots are L-shaped, the positioning slots at both ends cooperate with the positioning housing to form two sockets that are mutually perpendicular;
the positioning slots located in the middle of the positioning housing are symmetrically set with spacing, and the two positioning slots cooperate to form three sockets, with two adjacent sockets being mutually perpendicular.

In the aforementioned flame-retardant box for the power battery, adjacent accommodating slots are provided with an isolation structure at their openings that cooperate with the box covers; the isolation structure separates gaps between adjacent accommodating slots and the box covers, or make the gaps not relative.

In the aforementioned flame-retardant box for the power battery, the isolation structure consists of two isolation planes located at different heights on upper surfaces of the partitions between adjacent accommodating slots; the box covers on the adjacent accommodating slots contact the corresponding isolation planes to close off the accommodating slots.

In the aforementioned flame-retardant box for the power battery, the isolation structure consists of a partition plate or a partition groove positioned on the partition between adjacent accommodating slots, the partition plate or the partition groove is located between the adjacent box covers.

In the aforementioned flame-retardant box for the power battery, the side plates are opposite to long sides of the batteries in the corresponding accommodating slots.

In the aforementioned flame-retardant box for the power battery, a distance between inner walls of each accommodating slot and the battery module placed inside is 2-20 mm.

After adopting the above structure, the box body and box cover made of fireproof material layer cooperate to form a flame-retardant chamber that prevents air convection; when internal deflagration occurs, the internal pressure increases, pushing open the gap between the box cover and the box body, allowing the high temperature generated by the battery to quickly escape; additionally, when the internal pressure decreases, the closed flame-retardant chamber can minimize the amount of oxygen entering the box, thereby preventing further combustion; tests have shown that when the battery undergoes thermal runaway, the maximum internal temperature point of the battery can reach around 1300 degrees, while the gas expelled from the box body is minimal, so the surrounding temperature does not become excessively high. When using the flame-retardant box to protect various batteries, it effectively prevents the ignition of surrounding batteries during thermal runaway, greatly enhancing the safety of both new and old power batteries.

### Brief Description of Accompanying Drawings

The invention will be further described in detail below with reference to the embodiments shown in the accompanying drawings, but this does not constitute any limitation on the invention.
FIG. 1 is a schematic diagram of the structure of Embodiment 1 of the invention;
FIG. 2 is a schematic diagram of the structure of Embodiment 2 of the invention;
FIG. 3 is a partially enlarged schematic diagram of point A in FIG. 2;
FIG. 4 is a cross-sectional schematic diagram of Embodiment 2 of the invention;
FIG. 5 is a partially enlarged schematic diagram of point B in FIG. 4;
FIG. 6 is a schematic diagram of the structure of Embodiment 3 of the invention;
FIG. 7 is a partially enlarged schematic diagram of point C in FIG. 6;
FIG. 8 is a schematic diagram of the structure of Embodiment 4 of the invention;
FIG. 9 is a partially enlarged schematic diagram of point D in FIG. 8;
FIG. 10 is a schematic diagram of the structure of Embodiment 5 of the invention;
FIG. 11 is a cross-sectional schematic diagram of FIG. 10;
FIG. 12 is a schematic diagram of the structure of Embodiment 6 of the invention;
FIG. 13 is a cross-sectional schematic diagram of FIG. 12.

In the figures: 1 box body; 1a side plate; 1c partition; 1b bottom plate; 2 box cover; 3 accommodating slot; 4 wire passing hole; 5 waterproof tape; 6 spring latch assembly; 7 positioning housing; 7a positioning cover; 8 positioning slot; 9 thermal conductive plate; 10 sealing plate; 11 isolation plane; 12 partition plate; 13 partition groove.

### Specific Embodiment of the invention

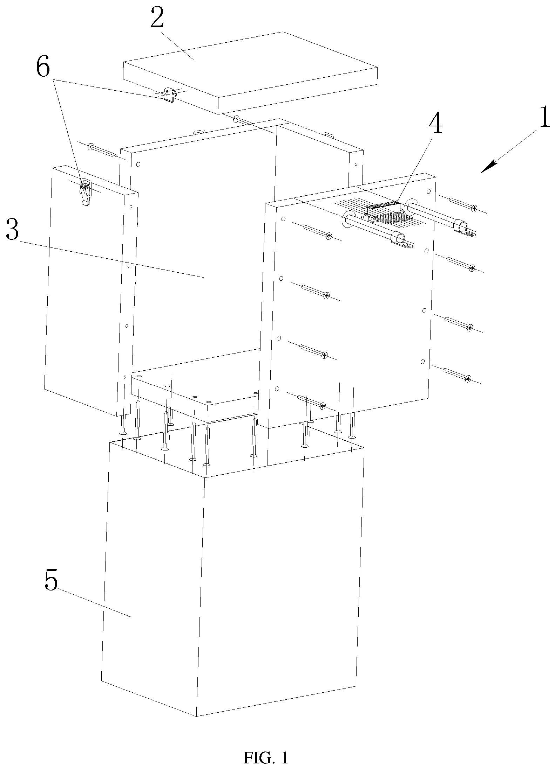

Referring to FIG. 1, a flame-retardant box for a power battery provided by the invention comprises a box body 1 and a box cover 2 made from fireproof material layers, the fireproof material layers are composed of refractory materials that can withstand high temperatures of 1300 degrees Celsius for a short period.

The box body 1 and the box cover 2 are hinged together, with a positioning component arranged at an end away from a hinge end to secure the box body 1 and the box cover 2. Preferably, the positioning component is a spring latch assembly 6. Of course, the assembly method for the box body and the box cover may also employ other conventional connection structures known in the field, such as a hook on one side and an elastic lock on the other, all of which are equivalent alternatives that those skilled in the art can easily conceive. The spring latch assembly is configured to adopt various conventional structures or similar structures with elastic functions, depending on the specific situation. The spring latch assembly allows the box cover to be pushed open during a battery thermal runaway event to release pressure; after the short-duration thermal runaway, when oxygen supply is diminished and the pressure decreases, the cover can reseal effectively, thereby isolating external air and allowing the internal combustion point to rapidly extinguish due to lack of oxygen. Of course, tests have shown that even if a non-elastic structure is used as the positioning component instead of the conventional one, it is still effective during battery thermal runaway, although it may cause adjacent batteries be subjected to some high-temperature impact, causing some heat to enter the accommodating slots of the adjacent batteries.

A positioning structure is arranged outside the box body 1 to secure each fireproof material layer; at least one accommodating slot 3 for receiving batteries is formed horizontally inside the box body 1, the box cover 2 and the accommodating slot 3 cooperate to form an independent flame-retardant chamber that prevents air convection; wire passing holes 4 are arranged on sidewalls of the box body 1. When each wire passing hole passes through the wire, a T-shaped silicone wire protection ring is used for sealing. Alternatively, other conventional sealing materials in the field, such as rubber or putty, may be used. The preferred material is silicone, which carbonizes on the surface under short-duration high-temperature conditions while still maintaining the characteristics of silicone internally, ensuring a sealing effect; this allows for sealing during battery failure and thermal runaway, and after the thermal runaway event, it still maintains the seal at the wire passing holes to prevent air from entering. When adopting installing terminals, rubber rings can also be used for sealing, which is a commonly used technique in the field.

Preferably, the side plates 1a are opposite to long sides of the batteries in the corresponding accommodating slots 3. In other words, they face the larger end surface of the battery. Taking soft-pack batteries or power batteries as an example, this means that they are opposite to the large surfaces of each cell inside. The effect of this arrangement is that during a battery thermal runaway event, the large impact force will not directly strike the partitions, but will be absorbed by the side plates. The benefit is that even if the power of the battery's thermal runaway is immense, it will not cause damage to the partitions, and the thermal runaway will not affect the batteries in adjacent accommodating slots.

More preferably, a distance between inner walls of each accommodating slot 3 and the battery module placed inside is 2-20 mm, preferably 5-15mm. The battery module refers to the battery and its connected accessories, such as switches, control boards, or protective plates. With this structure, even if a battery in a certain accommodating slot experiences a thermal runaway event with immense power, resulting in significant impact on the partitions, the small gap between the accommodating slot and the battery is insufficient to cause severe damage such as cracking of the partitions. When the partitions do deform, they will create larger gaps between the partitions and the box cover, thereby providing effective pressure release space and further ensuring the safety of the batteries in adjacent accommodating slots.

In this embodiment, the positioning structure comprises fastening screws that connect the fireproof material layers, and an outer sidewall of the box body 1 is circumferentially covered with a waterproof tape 5. This waterproof tape further enhances the mechanical strength of the box body while also preventing moisture ingress.

### Embodiment 2

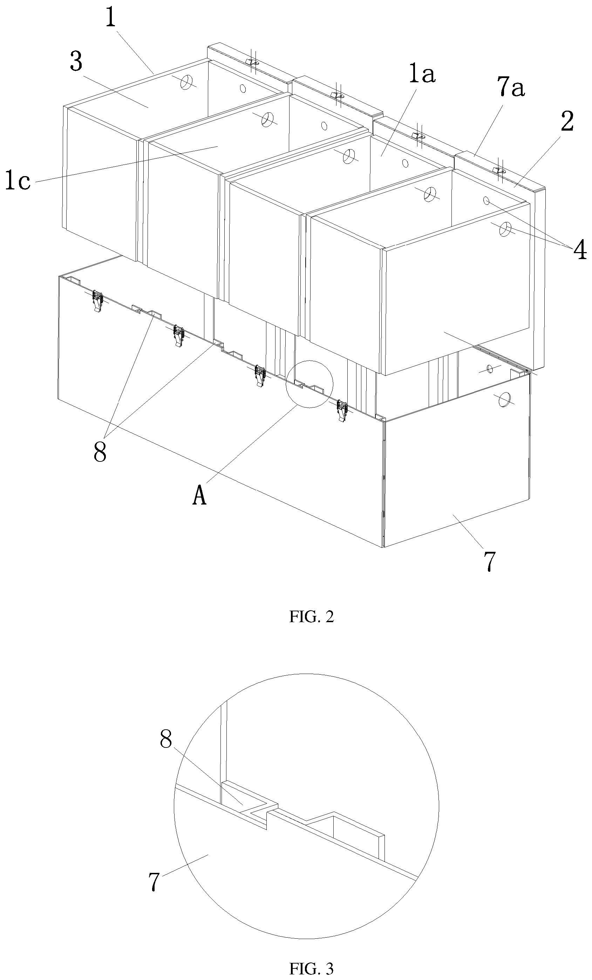

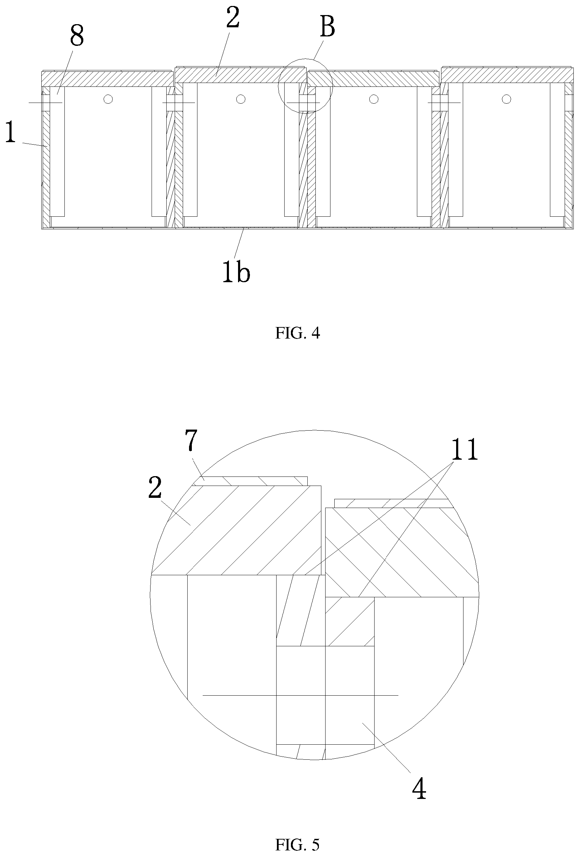

Referring to FIG. 2 to FIG. 5, a flame-retardant box for a power battery provided by the invention has a structure that is essentially the same as that of Embodiment 1, with the difference being that the box body 1 comprises several side plates 1a arranged circumferentially to form a closed annular structure, along with a bottom plate 1b located at a bottom of the closed annular structure formed by the side plates 1a; several partitions 1c are spaced within the side plates 1a, and the accommodating slots 3 are formed by the cooperation of the side plates 1a, partitions 1c, and the bottom plate 1b; both the side plates 1a and the partitions 1c are made of fireproof material layers, while the bottom plate 1b is made of either a fireproof material layer or fireproof fabric; the box covers 2 correspond to and fit with the accommodating slots 3 one-to-one. In this embodiment, the bottom plate is made of fireproof fabric, which minimizes the impact on the bottom from flames that rise during combustion, thus allowing for a larger space within the accommodating slot.

It should be noted that the box body in this embodiment is elongated and divided into several compartments by partitions, arranged in a row with multiple columns. Of course, those skilled in the art may adjust the size of the box body according to actual needs to form multiple rows and columns, or combine single-row multiple-column boxes to create a multi-row multi-column structure, all of which are easily conceived equivalent alternatives by those skilled in the art.

In this embodiment, the positioning structure comprises a positioning housing 7, the positioning housing 7 is provided with positioning slots 8 for securing the fireproof material layers, the bottom plate 1b is located at a bottom inside the positioning housing 7, the side plates 1a and partitions 1c are secured through the positioning slots 8, with each fireproof material layer cooperating to form a groove body that is open on one side; positioning covers 7a that correspond to the box covers 2 are hinged at an opening of the positioning housing 7, and the positioning covers 7a wrap around outer surfaces of the box covers 2, leaving one surface facing the accommodating slot uncovered, while remaining surfaces are covered by the positioning cover. A through hole corresponding to the wire passing hole is arranged on the positioning housing.

The fireproof material layer located at the bottom is configured to be inserted through the opening of the positioning housing or from a side of the positioning housing; depending on the insertion method, the shape of the fireproof material layer is configured to be adaptively changed, which is easily conceived by those skilled in the art. When inserting from the side, an installation notch is arranged at a bottom of a side wall of the positioning housing 7, and a sealing plate 10 with an inner fireproof material layer is arranged at the installation notch.

Of course, those skilled in the art can replace the fireproof material layer located at the bottom with commonly used fireproof materials, such as fireproof fabric, based on the concepts of the present invention. This is also an easily conceived equivalent alternative by those skilled in the art.

Preferably, in this embodiment, the positioning housing 7 is rectangular, the positioning slots 8 at both ends of the positioning housing 7 are L-shaped, the L-shaped positioning slots 8 cooperate with the positioning housing 7 to form two sockets that are mutually perpendicular.

One positioning slot 8 located in a middle of the positioning housing 7 consists of a "[ " shaped groove body and vertically folded edges at two free ends of the integrated groove body, this positioning slot 8 cooperates with the positioning housing 7 to form three sockets, two adjacent sockets are mutually perpendicular, forming a T-shape; the positioning housing 7, positioning slots 8, and fireproof material layers cooperate to form several independent accommodating slots 3. The positioning slots are configured to be fixed to the positioning housing using methods such as welding, riveting, or screw connections.

More preferably, to prevent flames or high-temperature gases from entering adjacent accommodating slots when a battery in one accommodating slot undergoes thermal runaway, two adjacent accommodating slots 3 are provided with an isolation structure at their openings that cooperate with the box covers 2; the isolation structure separates gaps between adjacent accommodating slots 3 and the box covers 2, or make the gaps not relative. In this embodiment, the isolation structure consists of two isolation planes 11 located at different heights on upper surfaces of the partitions 1c between adjacent accommodating slots 3; the box covers 2 on the adjacent accommodating slots 3 contact the corresponding isolation planes 11 to close off the accommodating slots 3.

By setting the isolation planes, the gaps between the adjacent accommodating slots and the box cover are not on the same plane, which can effectively prevent flames or high-temperature gases from entering the adjacent accommodating slots during a battery thermal runaway event.

### Embodiment 3

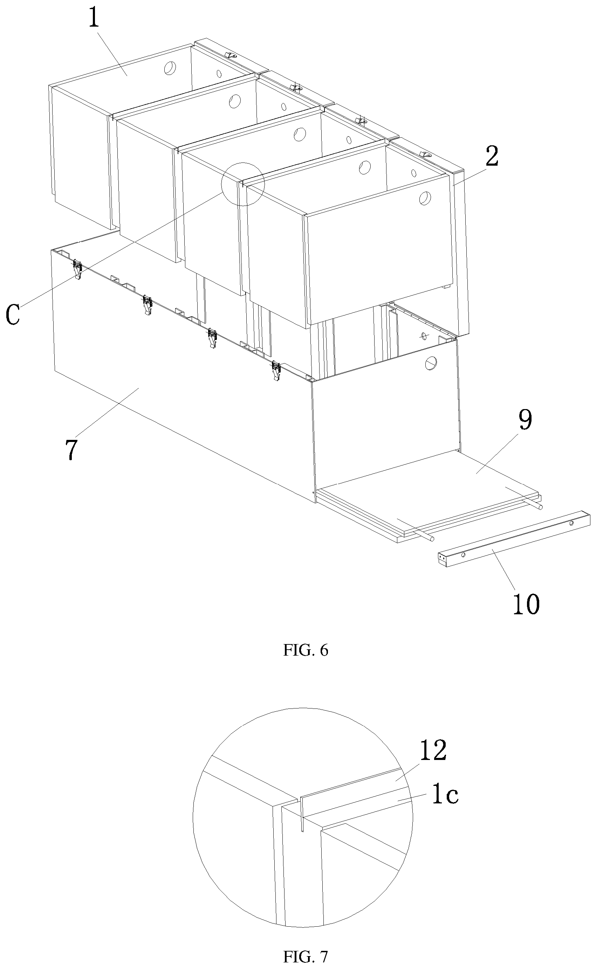

Referring to FIG. 6 and FIG. 7, a flame-retardant box for a power battery provided by the invention has a structure that is essentially the same as that of Embodiment 1, with the difference being that a thermal conductive plate 9 for heating or heat dissipation is arranged at the bottom inside the positioning housing 7. The thermal conductive plate is similarly inserted from the installation notch in the same manner as the bottom fireproof material layer. This structure is suitable for environments and application scenarios with high temperature requirements, which can better maintain the constant temperature of the battery.

At the same time, in this embodiment, the isolation structure consists of a partition plate 12 positioned on the partition 1c between adjacent accommodating slots 3, the partition plate 12 is located between the adjacent box covers 2.

### Embodiment 4

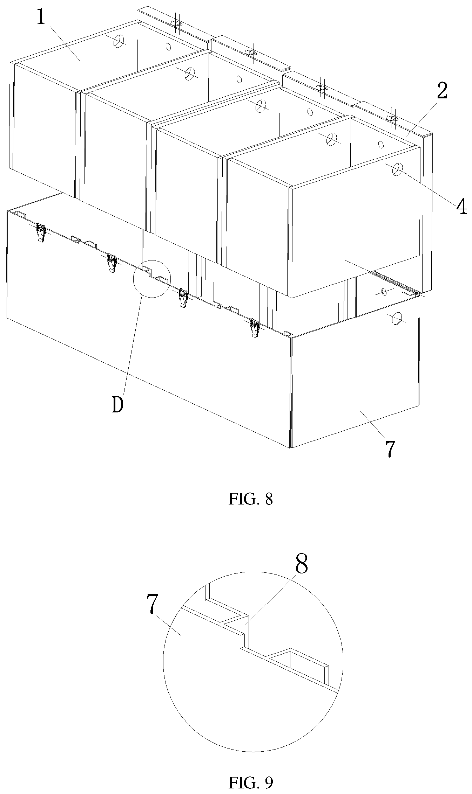

Referring to FIG. 8 and FIG. 9, a flame-retardant box for a power battery provided by the invention has a structure that is essentially the same as that of Embodiment 2, with the difference being that the positioning housing 7 and the positioning slots 8 are integrally formed as a whole structure, the positioning slots 8 are L-shaped, the positioning slots 8 at both ends cooperate with the positioning housing 7 to form two sockets that are mutually perpendicular;
the positioning slots 8 located in the middle of the positioning housing 7 are symmetrically set with spacing, and the two positioning slots 8 cooperate to form three sockets, with two adjacent sockets being mutually perpendicular. This structure allows the positioning housing to be directly cast and formed, saving assembly costs.

The isolation structure in this embodiment is the same as that in Embodiment 2.

### Embodiment 5

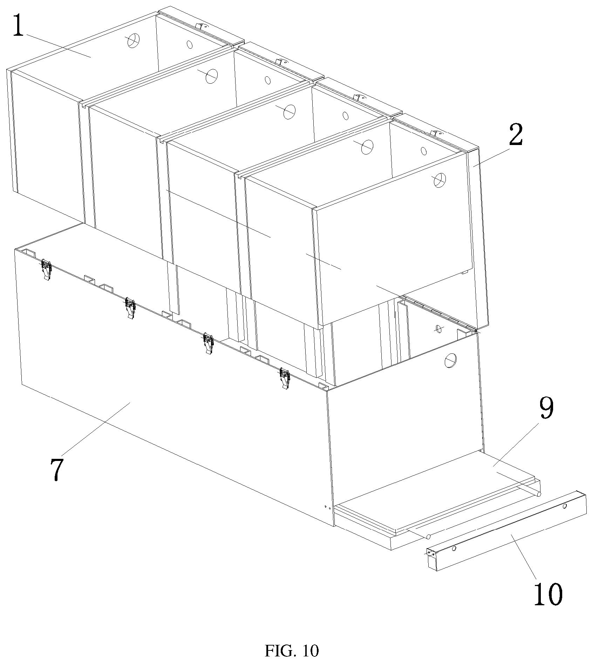

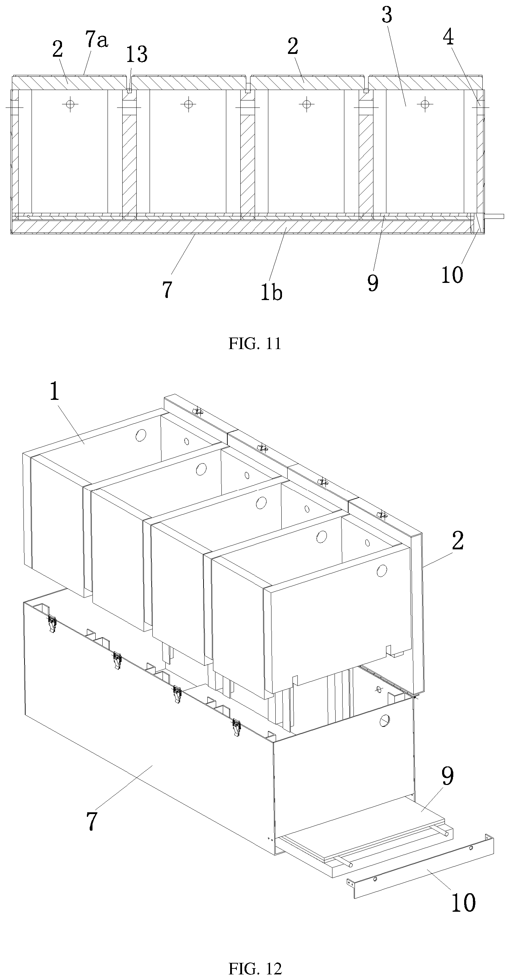

Referring to FIG. 10 and FIG. 11, a flame-retardant box for a power battery provided by the invention has a structure that is essentially the same as that of Embodiment 4, with the difference being that a thermal conductive plate 9 for heating or heat dissipation is arranged at the bottom inside the positioning housing 7. This structure is suitable for environments and application scenarios with high temperature requirements, which can better maintain the constant temperature of the battery.

At the same time, in this embodiment, the isolation structure consists of a partition groove 13 positioned on the partition 1c between adjacent accommodating slots 3, the partition groove 13 is located between the adjacent box covers 2. A gap formed by the partition groove can provide a buffer space for high-speed airflow ejected from the gap formed between the accommodating slot and the box cover, and creates turbulence within the partition groove, effectively preventing flames and high-temperature gases from entering the adjacent accommodating slots.

### Embodiment 6

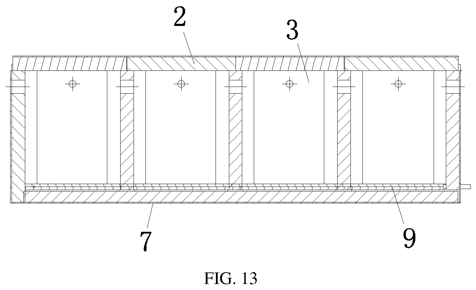

Referring to FIG. 12 and FIG. 13, a flame-retardant box for a power battery provided by the invention has a structure that is essentially the same as that of Embodiment 5, with the difference being that the sealing plate 10 here does not need to be separately covered with a fireproof material layer, but instead cleverly utilizes the cooperation of the bottom fireproof material layer and the end fireproof material layer to form a fireproof seal. In this case, the sealing plate is merely a metal plate. Accordingly, a clearance notch is arranged at the lower end of the end fireproof material layer to allow the circulation inlet and outlet of a cooling plate to communicate with the external environment. The usage effect is the same as that of Embodiment 5.

The above embodiments are preferred embodiments of the invention and are only used to facilitate the illustration of the invention. They are not intended to limit the invention in any way. Any person skilled in the art who makes local modifications or alterations to the technical content disclosed in the invention without departing from the scope of the technical features of the invention shall still fall within the scope of the technical features of the invention.

## Claims

1. A flame-retardant box for a power battery, comprising a box body (1) and a box cover (2) made of high-temperature-resistant fireproof material layers, a positioning structure is arranged outside the box body (1) to secure each fireproof material layer; at least one accommodating slot (3) for receiving batteries is formed inside the box body (1), the box cover (2) and the accommodating slot (3) cooperate to form an independent flame-retardant chamber that prevents air convection; wire passing holes (4) are arranged on sidewalls of the box body (1).

2. The flame-retardant box for the power battery of claim 1, wherein the box body (1) and the box cover (2) are hinged, a spring latch assembly (6) for securing the box body (1) and the box cover (2) is arranged at an end away from a hinged end.

3. The flame-retardant box for the power battery of claim 1, wherein the box body (1) comprises several side plates (1a) arranged circumferentially to form a closed annular structure and a bottom plate (1b) positioned at a bottom of the closed annular structure formed by the side plates (1a); the side plates (1a) are opposite to long sides of the batteries in the corresponding accommodating slots (3);
several partitions (1c) are spaced apart within the side plates (1a), the accommodating slots (3) are formed by the cooperation of the side plates (1a), partitions (1c), and the bottom plate (1b); both the side plates (1a) and the partitions (1c) are made of fireproof material layers, while the bottom plate (1b) is made of either a fireproof material layer or fireproof fabric; the box covers (2) correspond to and fit with the accommodating slots (3) one-to-one.

4. The flame-retardant box for the power battery of claim 3, wherein the positioning structure comprises a positioning housing (7), the positioning housing (7) is provided with positioning slots (8) for securing the fireproof material layers, the bottom plate (1b) is located at a bottom inside the positioning housing (7), the side plates (1a) and partitions (1c) are secured through the positioning slots (8), with each fireproof material layer cooperating to form a groove body that is open on one side;
positioning covers (7a) that correspond to the box covers (2) are hinged at an opening of the positioning housing (7), and the positioning covers (7a) wrap around outer surfaces of the box covers (2).

5. The flame-retardant box for the power battery of claim 4, wherein the positioning housing (7) is rectangular, the positioning slots (8) at both ends of the positioning housing (7) are L-shaped, the L-shaped positioning slots (8) cooperate with the positioning housing (7) to form two sockets that are mutually perpendicular;
one positioning slot (8) located in a middle of the positioning housing (7) consists of a "[ " shaped groove body and vertically folded edges at two free ends of the integrated groove body, this positioning slot (8) cooperates with the positioning housing (7) to form three sockets, two adjacent sockets are mutually perpendicular; the positioning housing (7), positioning slots (8), and fireproof material layers cooperate to form several independent accommodating slots (3).

6. The flame-retardant box for the power battery of claim 5, wherein a thermal conductive plate (9) for heating or heat dissipation is arranged at the bottom inside the positioning housing (7).

7. The flame-retardant box for the power battery of claim 3, wherein adjacent accommodating slots (3) are provided with an isolation structure at their openings that cooperate with the box covers (2); the isolation structure separates gaps between adjacent accommodating slots (3) and the box covers (2), or make the gaps not relative.

8. The flame-retardant box for the power battery of claim 3, wherein the isolation structure consists of two isolation planes (11) located at different heights on upper surfaces of the partitions (1c) between adjacent accommodating slots (3); the box covers (2) on the adjacent accommodating slots (3) contact the corresponding isolation planes (11) to close off the accommodating slots (3).

9. The flame-retardant box for the power battery of claim 3, wherein the isolation structure consists of a partition plate (12) or a partition groove (13) positioned on the partition (1c) between adjacent accommodating slots (3), the partition plate (12) or the partition groove (13) is located between the adjacent box covers (2).

10. The flame-retardant box for the power battery of claim 1 or 3, wherein a distance between inner walls of each accommodating slot (3) and the battery module placed inside is 2-20 mm.
